# EUROPEAN PATENT APPLICATION

(11) **EP 4 803 235 A1**
(43) Date of publication of application: **09.09.2026**
(21) Application number: 25194163.9
(22) Date of filing: 05.08.2025
(51) Int. Cl.: B23K 9/12, B23K 9/173, B23K 9/28, B23K 37/02

(54) **ELECTRIC ARC TORCH AND SYSTEM**

(30) Priority: 04.03.2025 US 202519069467
(71) Applicant: Lincoln Global, Inc., Cleveland, OH 44117 (US)
(72) Inventor: WILLIAMS, Christopher J., Morris Hall, TD15 2JY (GB)
(74) Representative: Hoyng Rokh Monegier B.V.

(57) **Abstract**

A welding torch has a proximal portion, a distal portion including a contact tip and a diffuser, and a hexapod actuator located between the proximal portion of the welding torch and the distal portion of the welding torch. The hexapod actuator has a moving platform movable with six degrees of freedom and having a central opening through the moving platform. The distal portion of the welding torch is moved by said moving platform in said six degrees of freedom. A wire electrode is fed to the contact tip through the central opening of the moving platform during movement of the distal portion of the welding torch by the moving platform.

## Description

### BACKGROUND OF THE INVENTION

### Field of the Invention

The present invention relates to electric arc torches, such as arc welding torches and plasma arc cutting torches. In particular, the present invention relates to such torches having a built-in actuator that moves a portion of the torch during operation.

### Description of Related Art

During manual welding, a welding torch can be manipulated by the operator to achieve a desired weld bead, such as by weaving the torch back and forth in a generally perpendicular direction to the direction of torch travel. The operator may also adjust the torch angle during welding. Inexperienced welders must learn proper weaving or other torch manipulation techniques to create desired welds. Torch weaving can also be performed automatically by a robot arm during a robot welding operation. However, the robot arm may not be able to accelerate the torch as needed to perform a desired weave pattern due to inertia in the system. Similar to welding torches, the orientation of plasma arc cutting torches can be manipulated during a plasma cutting operation, for example to achieve a desired bevel angle along a cut edge. It would be desirable to include an actuator within a welding torch and/or a plasma arc torch to automatically move the distal end of the torch to achieve a desired weave pattern, torch angle, etc.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a welding torch comprising a torch gun tube, a diffuser located distal of the torch gun tube, a contact tip located distal of the torch gun tube, and a hexapod actuator located proximal of the diffuser and the contact tip. The hexapod actuator comprises a moving platform movable with six degrees of freedom and having a central opening through the moving platform. The torch gun tube, the diffuser, and the contact tip are moved by said moving platform in said six degrees of freedom. A wire electrode is fed to the contact tip through the central opening of the moving platform during movement of the torch gun tube, the diffuser, and the contact tip by the moving platform.

In accordance with another aspect of the present invention, provided is a welding torch comprising a torch gun tube, a diffuser located distal of the torch gun tube, a contact tip located distal of the torch gun tube, and a motion stage located proximal of the diffuser and the contact tip. The motion stage comprises a first linear actuator, a second linear actuator, a third linear actuator, a fourth linear actuator, a fifth linear actuator, a sixth linear actuator, and a moving platform movable with six degrees of freedom by the first linear actuator, the second linear actuator, the third linear actuator, the fourth linear actuator, the fifth linear actuator, and the sixth linear actuator. The moving platform has a central opening through the moving platform, wherein the torch gun tube, the diffuser, and the contact tip are moved by said moving platform in said six degrees of freedom. A wire electrode is fed to the contact tip through the central opening of the moving platform during movement of the torch gun tube, the diffuser, and the contact tip by the moving platform.

In accordance with another aspect of the present invention, provided is an arc welding system comprising a welding robot including a robot base and a robot arm attached to the robot base. A welding torch is attached to the robot arm. The welding torch comprises a diffuser and a contact tip. A hexapod actuator is attached to the welding robot and comprises a moving platform movable with six degrees of freedom. The hexapod actuator is located proximal of the diffuser and the contact tip. A welding power supply is configured to provide an electrical power output to the welding torch. A motion controller is operatively connected to the hexapod actuator to control movements of the moving platform during a welding operation.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 shows a welding system;
FIG. 2 shows welding torch;
FIG. 3 shows a hexapod actuator;
FIG. 4 shows six degrees of freedom;
FIG. 5 shows a robotic arc welding system;
FIG. 6 shows a welding torch;
FIG. 7 shows a welding robot and hexapod actuator;
FIG. 8 shows a plasma arc torch;
FIG. 9 is an exploded view showing components of the plasma arc torch;
FIG. 10 shows a plasma cutting table; and
FIG. 11 shows an example controller.

### DETAILED DESCRIPTION OF THE INVENTION

The present invention relates to electric arc torches, such as arc welding torches and plasma arc cutting torches, having a built-in actuator that moves a portion of the torch during operation. In particular, the actuator is a hexapod actuator that can move a portion of the torch with six degrees of freedom. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

While embodiments of the present invention described herein are discussed in the context of a gas metal arc welding (GMAW) system, other embodiments of the invention are not limited thereto. For example, embodiments can be utilized in fluxcored arc welding (FCAW), metal-cored arc welding (MCAW), gas tungsten arc welding (GTAW) as well as other similar types of welding operations. Further, embodiments of the present invention can be used in manual, semi-automatic and robotic welding operations. Embodiments of the present invention can also be used in metal deposition operations that are similar to welding, such as additive manufacturing, hardfacing, and cladding. As used herein, the term "welding" is intended to encompass all of these technologies as they all involve material deposition to either join or build up a workpiece. Therefore, in the interests of efficiency, the term "welding" is used below in the description of exemplary embodiments, but is intended to include all of these material deposition operations, whether or not joining of multiple workpieces occurs.

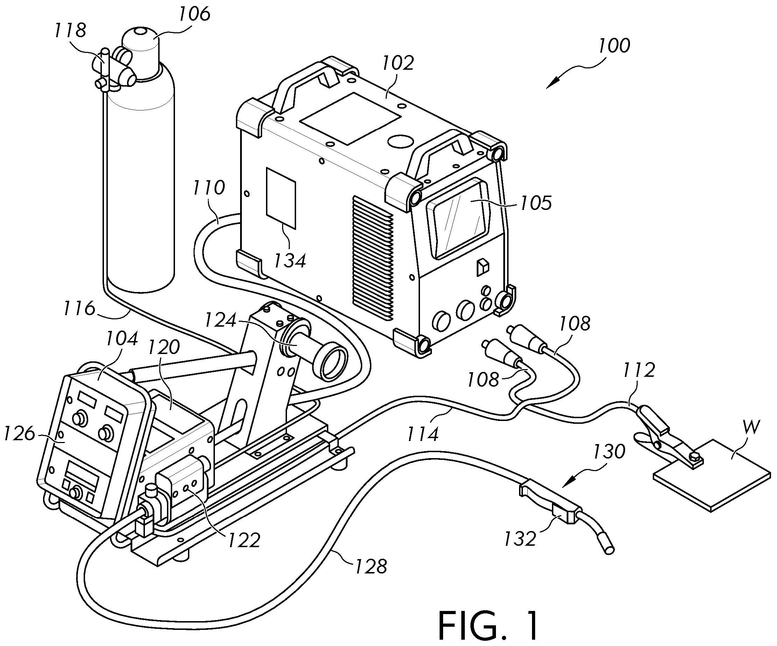

Referring now to the drawings, Fig. 1 shows an example welding system 100. The welding system 100 includes welding power supply 102, a wire feeder 104, and a shielding gas supply 106. Welding power supply 102 includes power cables 108, control cable 110, and power supply cables (not shown). Power cables 108 include a ground wire and clamp 112 connected to a workpiece W, and a power cable 114 for supplying welding waveforms generated by the welding power supply 102 to the wire feeder 104. Control cable 110 may be configured to connect to wire feeder 104 to provide communications between the power supply 102 and the wire feeder. Such communications could also be wireless. It is understood that welding power supply 102, power cables 108, and control cable 110 can have any configuration suitable for supplying power and welding controls within the welding system 100. Although the wire feeder 104 and welding power supply 102 are shown as two separate devices interconnected by cabling, the welding power supply and wire feeder could be integrated into a single welding machine.

Further illustrated in Fig. 1, gas conduit 116 and regulator 118 are configured to connect the shielding gas supply 106 to the wire feeder 104. The shielding gas supply 106 may include inert gases, active gases, or a combination of both, including but not limited to argon, helium, carbon dioxide, argon and helium, argon and hydrogen, and other gas combinations. The gas supply may be any gas or combination of gases configured to shield a weld from the atmosphere.

As shown in Fig. 1, wire feeder 104 may include a housing 120, gear box 122, wire spool assembly 124, and user interface 126. Extending from the gear box 122 is a hose 128 that is configured to connect to a welding torch 130. The housing 120 may be connected to the user interface 126 and gear box 122. Further, the control cable 110 and power cable 114 extending from welding power supply 102, and the gas conduit 116 extending from gas supply 106, are configured to connect to housing 120, gear box 122, and hose 128. Gear box 122 includes at least a drive motor and a plurality of rollers that advance and retract a wire electrode drawn from a spool (not shown) mounted on the spool assembly 124 or drawn from a bulk package, such as a box or drum. Extending between the gear box 122 and the welding torch 130 is the hose 128. The hose 128 provides a conduit for the welding wire electrode and shielding gas and conducts the welding waveforms to the torch 130. The welding torch 130 can include a manually operable trigger 132 located at a proximal or upstream portion of the torch, to initiate and stop a welding operation. The hose 128 can conduct a trigger signal from the torch trigger to the wire feeder 104 and to the welding power supply 102 to control feeding of the wire electrode and the provision of the welding waveforms and shielding gas to the torch. It is understood that the hose 128 and welding torch 130 may have any configuration suitable for supplying welding wire, shielding gas, and controls between the torch and wire feeder 102. The torch 130 can include a contact tip for conducting the welding waveforms from the wire feeder 104 to the wire electrode, and a shielding gas diffuser and nozzle to direct the shielding gas around the arc and toward the molten puddle. The torch 130 can also include a hexapod actuator to automatically move the distal portion of the torch with six degrees of freedom during a welding operation. The torch 130 and hexapod actuator are discussed in more detail below.

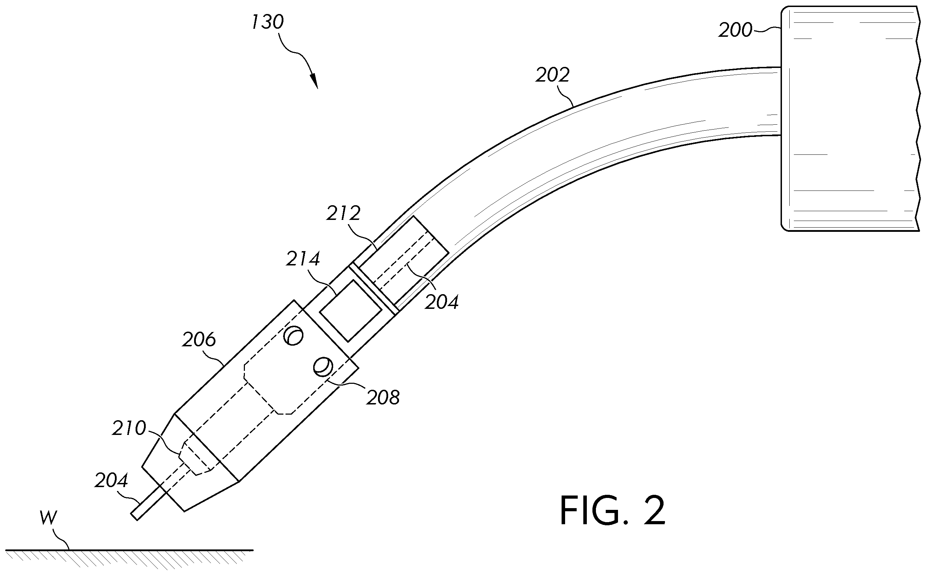

Referring now to Fig. 2, a schematic view of a portion of a gas-shielded welding torch 130 is shown in position above workpiece W. The distal end of the torch handle 200 is shown in Fig. 2 along with a gun tube or gooseneck 202 extending from the torch handle. Welding torch 130 is supplied with one or more wire electrodes 204 (e.g., steel, aluminum, alloys, composites, cored, etc., or other welding wire known to those in the art) from a wire supply spool, drum, etc. by a wire feeder. The wire feeder not only regulates the rate at which welding wire 204 is fed through the torch 130, but it can also control the flow of shielding gas from a gas source to the torch.

The distal portion of the torch 130 includes a nozzle 206. The nozzle 206 directs the flow of shielding gas toward the workpiece W and molten puddle. The distal portion of the torch further includes a shielding gas diffuser 208 and a contact tip 210 within the nozzle 206. The contact tip 210 extends from the shielding gas diffuser 208 and is attached to the diffuser, such as via a threaded connection. The contact tip 210 has a through bore and entrance and exit orifices for the wire electrode 204. In certain embodiments, the contact tip 210 can accommodate two or more wire electrodes fed simultaneously during a multi-wire deposition operation, and can have multiple through bores and entrance and exit orifices for the wire electrodes.

The torch 130 further includes a hexapod actuator 212. The hexapod actuator 212 is located upstream or proximal of the diffuser 208, contact tip 210 and nozzle 206 (e.g., the hexapod actuator is located between a proximal portion of the welding torch having the trigger and the distal portion of the welding torch). In Fig. 2, the hexapod actuator 212 is located along the gun tube or gooseneck 202. However, the hexapod actuator 212 could be located in other locations along the torch 130, such as between the gooseneck 202 and the handle 200, or between the gooseneck and the diffuser 208 for example.

The hexapod actuator 212 is a miniature motion stage hosted in the torch 130. The hexapod actuator 212, when activated during a welding operation, automatically moves the distal portion of the torch 130. The hexapod actuator 212 orients the nozzle 206, diffuser 208, contact tip 210 and wire electrode 204 relative to the workpiece W.

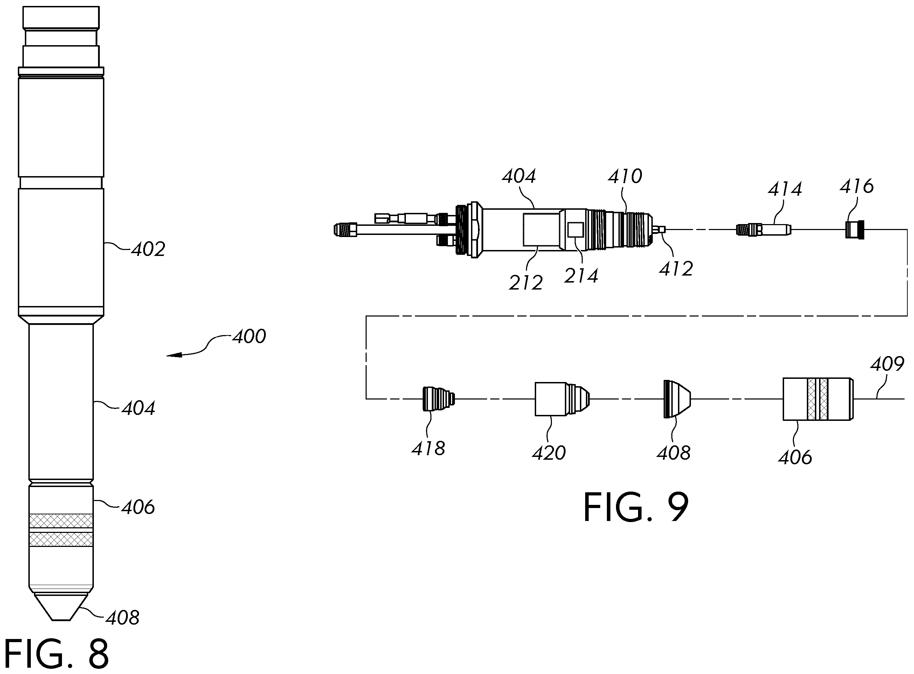

As the operator moves the welding torch 130 along a travel path along the workpiece W, the orientation of the distal portion of the welding torch may change (e.g., due to operator error). For example, the "work angle" and/or the "travel angle" of the distal portion of the welding torch may deviate from appropriate ranges. The hexapod actuator 212 can automatically move or adjust the distal portion of the welding torch 130 during the welding operation so that an appropriate orientation of the distal portion of the torch is maintained, thereby improving weld quality and weld repeatability. The hexapod actuator 212 can also move the distal portion of the welding torch 130 to achieve various known weave welding patterns (e.g., circular, zigzag, triangular, figure 8, and the like). An inexperienced welder may not know how to correctly perform weave welding or create certain weave patterns. However, the hexapod actuator 212 or a motion controller for the hexapod actuator can be programmed to automatically weave the distal portion of the torch 130 in a desired pattern at a programmed weave frequency and weave length and width. This allows a welder to move the welding torch 130 along the travel path without manually weaving the torch while the hexapod actuator 212 automatically performs or implements the weave welding pattern along the weld joint.

Torch position or orientation feedback for controlling the operation of the hexapod actuator 12 can be provided by one or more sensors in the torch 130. For example, the torch 130 can include an inertial measurement unit (IMU) 214 that generates torch position signals, such as acceleration and angular velocity and/or gyroscopic signals, during the welding operation. The torch position signals can be transformed to provide linear velocity, and linear and angular position. The torch position signals from the IMU 214 can be monitored as feedback by the hexapod actuator 212 directly, or the torch position signals can be monitored by a motion controller for the hexapod actuator. The operations of the hexapod actuator 212 and the movements of the distal end of the welding torch 130 during the welding operation can be controlled based on the feedback from the IMU 214, e.g., to achieve a desired torch work angle or travel angle and/or to implement a desired weave or welding bead pattern. The construction and application of inertial measurements units is well known in the art and need not be discussed in detail herein. The IMU 214 can be located distal of the hexapod actuator 212 as shown so as to be moved by the hexapod actuator, or the IMU could be located proximal or upstream of the hexapod actuator. In certain embodiments, the torch 130 can include multiple IMU's located at various locations along the torch as desired (e.g., upstream and downstream of the hexapod actuator 212).

A motion controller 134 for the hexapod actuator is shown schematically in Fig. 1. The motion controller 134 can be provided within the welding power supply 102, or it can be a separate, stand-alone device. The motion controller 134 can bidirectionally communicate with the welding power supply 102 to provide, for example, torch position information during welding. The torch position information can be used by the welding power supply 102 to provide real-time feedback to the welder during the welding operation. Such feedback can include audible or visible alerts to adjust the torch angle or travel speed for example. Audible and/or visible alerts can be provided through a welding helmet having suitable speakers, indicator lights, or a heads up display for example. Haptic feedback could also be provided to the welder via the torch 130 for example.

The motion controller 134 is operatively connected to the hexapod actuator 212 to control its movements during the welding operation based on torch position feedback from the IMU 214. For example, control and power cabling for the hexapod actuator 212 can be included in the torch hose 128 and the connections between the wire feeder 104 and power supply 102 to connect the motion controller 134 to the hexapod actuator and the **IMU** 214. The motion controller can be programmed to adjust or control the position of the distal end of the torch 130 during welding and execute a desired weave pattern or welding bead pattern (e.g., "stacked dimes"). In an example embodiment, the motion controller 134 adjusts the orientation of the hexapod actuator 212 via voltage or current level signals provided to the six separate linear actuators in the hexapod actuator. A desired motion control or weave pattern can be selected through a user interface on the welding power supply 102 or the wire feeder 104 or on a teach pendant for example, or be selected via a drawing file (e.g., CAD file) for the workpiece or by another form of path planning.

In certain embodiments, the welding system 100 can utilize machine learning techniques involving artificial intelligence (AI) and/or neural networks to train the motion controller 134 to perform "good" welds (i.e., acceptable weld bead patterns). The motion controller 134 can be trained based on torch motion data captured during manual welding by experienced welders to create training models. For example, the torch movements of experienced welders can be stored in memory to establish the various weave patterns executed by the motion controller 134 and hexapod actuator 212. Models (e.g., motion models) can be created and stored using the collected data from experienced operators/welders, and the models can change the behavior of the weld process and torch motion to provide a repeatable weld. The motion controller 134 can replicate the torch movements of the experienced welder by controlling the operation of the various linear actuators in the hexapod actuator 212. The stored torch movements can be further refined over time as the motion controller 134 is trained by additional motion data captured during subsequent welding operations whether manually performed or automatically performed by the hexapod actuator 212.

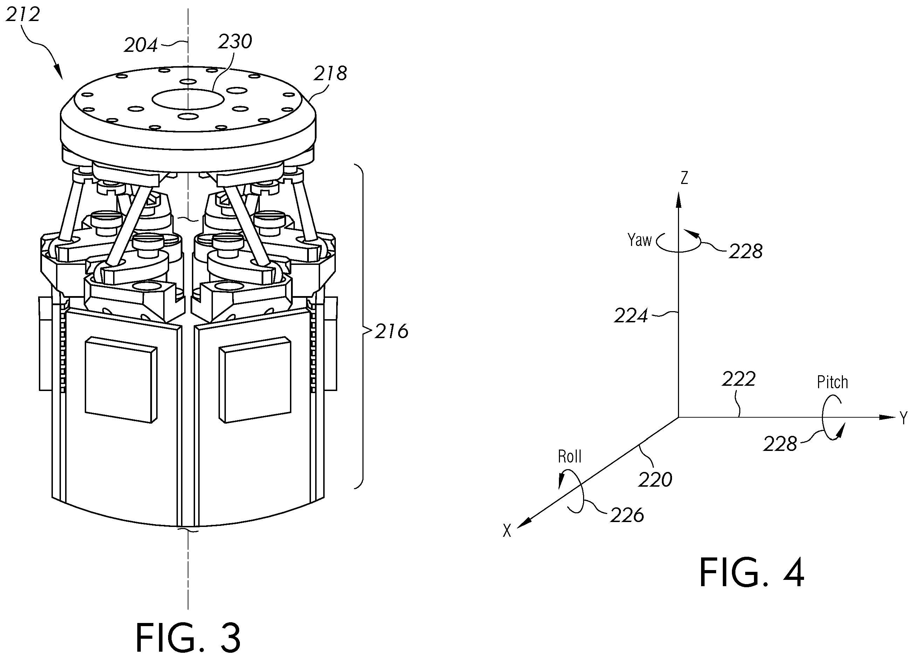

An example hexapod actuator 212 that can be installed in a welding torch or plasma cutting torch is shown in Fig. 3. A hexapod actuator is also known as a Stewart platform. The construction of hexapod actuators/Stewart platforms are well known and need not be discussed in detail herein. The hexapod actuator 212 has six linear actuators 216 which can be formed by small electric linear motors. The linear actuators 216 extend between a proximal base portion of the hexapod actuator 212 and a moving platform 218. Each linear actuator 216 has a leg that extends and retracts to control the spatial orientation of the moving platform 218. The moving platform 218 is movable by the linear actuators 216 with six degrees of freedom. The distal portion of the welding torch is attached to the moving platform 218 and can be moved by the moving platform in the six degrees of freedom during a welding operation to maintain a torch orientation, perform weave welding, etc. The six linear actuators 216 are separately operable or separately controllable by the hexapod motion controller to move the moving platform 218 in the six degrees of freedom. The six degrees of freedom in which the platform 218 can move are shown in Fig. 4. The six degrees of freedom include movement along a first linear axis 220 (e.g., X axis), movement along a second linear axis 222 (e.g., Y axis) that is perpendicular to the first linear axis, and movement along a third linear axis 224 (e.g. Z axis) that is perpendicular to both of the first linear axis and the second linear axis. The six degrees of freedom further include respective rotations about each of the first linear axis 220, the second linear axis 222, and the third linear axis 224. The respective rotations can be considered roll 226, pitch 228, and yaw 228 rotations.

Referring to Figs. 2 and 3, the moving platform 218 of the hexapod actuator 212 has a central opening 230. The wire electrode 204 is fed to the contact tip 210 in the welding torch 130 through the central opening 230 of the moving platform during movement of the distal portion of the welding torch by the moving platform. Although not shown in Figs. 2 and 3, the torch 130 can include a liner for the wire electrode. The liner can pass through the center of the hexapod actuator 212 and the wire electrode can be fed through the liner. The wire feed speed (WFS) of the wire electrode through the torch 130 is controlled by the welding power supply 102. In certain embodiments, the WFS can be adjusted based on the movements of the moving platform 218 during welding.

The welding torch having the hexapod actuator can be attached to a robot arm. For example, the proximal portion of the welding torch can be attached to the robot arm and the distal portion of the welding torch having the contact tip, diffuser and nozzle can be manipulated by the hexapod actuator to more easily allow the welding robot to perform weave welding. A welding robot has a lot of inertia when moving and may not be able to adjust the position of the welding torch quickly (e.g., when performing weave welding), or maintain sufficient stability or achieve a desired dynamic response. The hexapod actuator can adjust the position of the distal portion of the welding torch much more quickly than a robot arm. Applying a welding torch having a hexapod actuator in a robotic welding system can eliminate robot inertia problems and increase system reliability and predictability when performing robotic weave welding.

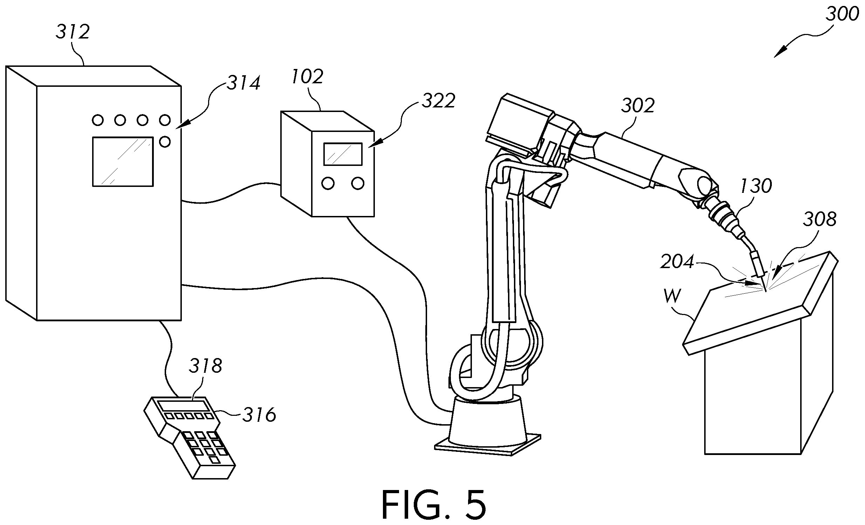

Figure 5 shows an example robotic welding system 300. The system includes a moving mechanical assembly that supports a tool. The moving mechanical assembly can be a robot arm 302, such as a six-axis articulating industrial robot arm as shown, or other types of moving mechanical assemblies, such as an orbital pipe welder. An end of arm tool or end effector is attached to the robot arm 302. Example end of arm tools include welding torches 130 and plasma cutting torches. For ease of explanation, aspects of the system 300 will be discussed in the context of an electric arc welding system employing a welding torch 130. However, it is to be appreciated that such aspects are also applicable to other types of systems and tools, such as plasma cutters and the like.

The torch 130 includes a consumable wire electrode 204, through which an arc 308 is generated between the torch and a workpiece W to perform a welding operation on the workpiece. The robot 302 controls the movements of the torch 130 during welding based on control instructions from a computer-based robot controller 312. The robot controller 312 can include a processor, memory, a user interface 314, and can further include additional components needed to control the movements of the robot 302. The robot controller 312, similar to the motion controller for the hexapod actuator in the torch, can store programmed instructions that when executed by the processor causes the robot controller to perform a desired welding operation. The motion controller for the hexapod actuator is not shown in Fig. 5. However the motion controller for the hexapod actuator could be a stand-alone device or be incorporated into the welding power supply 102 or the robot controller 312. For example, the robot controller 312 could be programmed to control the motion of both the robot arm 302 and the hexapod actuator simultaneously during a welding or cutting operation.

The robot controller 312 includes a handheld control pendant or teach pendant 316 operatively connected to the robot controller. The control pendant 316 includes a user interface 318 having a display and various user inputs. Using the control pendant 316, an operator can program or adjust various operations to be performed by the robot 312 and, in certain embodiments, the hexapod actuator. The operator can also view on a display of the user interface 318 information about the robot 302, and information about the operation the robot performs on the workpiece W using the torch 130 and the hexapod actuator (e.g., view a selected weave pattern to be performed by the hexapod actuator and the associated weave parameters).

The robot welding system 300 further includes a welding power supply 102. The welding power supply 102 provides an electrical power output to the torch 130 to generate the arc 308. The power supply 102 converts input electrical power (e.g., utility power) into a suitable arc waveform (e.g., a welding waveform) for performing an operation on the workpiece W. The power supply 102 can include electronic circuitry (e.g., PWM inverters, choppers, etc.) for generating a desired arc waveform. The power supply 102 can further include a processor, memory, and a user interface 322 for adjusting various parameters of the operation performed on the workpiece W (e.g., voltage, current, wire feed speed, AC balance, etc.)

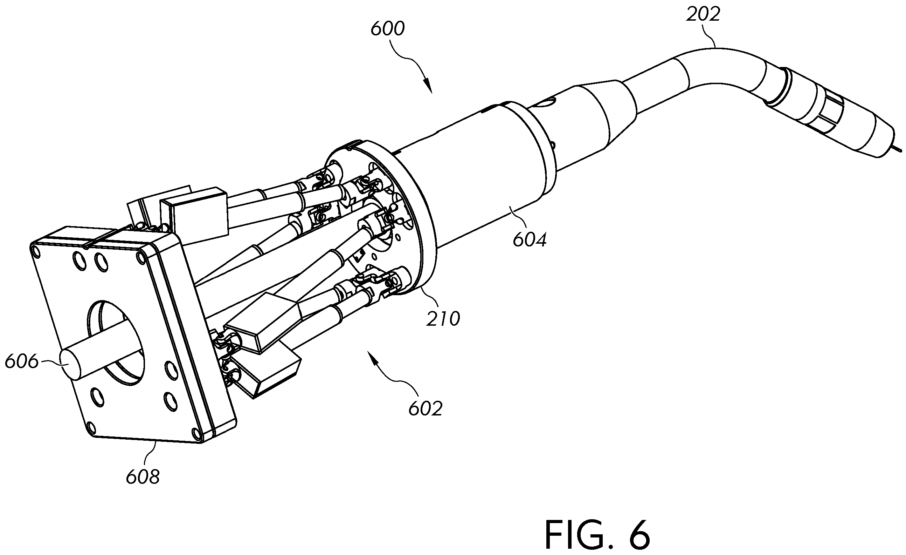

Figure 6 shows an embodiment of example welding torch 600 having a hexapod actuator 602. The welding torch 600 can be configured for mounting as an end of arm tool on a robot arm. The hexapod actuator 602 is located proximal of the torch gun tube or gooseneck 202 and proximal of the diffuser and contact tip, which are surrounded by the torch nozzle and not shown. The torch includes a base portion 604 that is attached to the moving platform 210 of the hexapod actuator 602. When the welding torch 600 is mounted to a robot arm, the hexapod actuator is located between the robot arm and more distal portions of the torch (e.g., the base portion 604, the torch gooseneck 202, the nozzle, the diffuser, the contact tip, etc.) A welding torch cable 606 extends through the center of the hexapod actuator 602 and into the base portion 604 of the welding torch 600 and terminates in the base portion. A wire electrode is fed to the contact tip of the welding torch 600 through the welding torch cable 606. The hexapod actuator 602 can include a printed circuit board, such as a motion and control printed circuit board, that is enclosed in a metallic housing 608 for shielding. The metallic housing 608 is located proximal or upstream of the moving platform 210, and the six linear actuators of the hexapod actuator 602 are located between the metallic housing and the moving platform. For example, the six linear actuators extend from the metallic housing 608 to the moving platform 210. The six linear actuators can be connected to the metallic housing 608 and to the moving platform 210 via universal joints for example. The metallic housing 608 can include a central opening through which the welding torch cable extends or passes through, similar to the moving platform 210.

A welding torch, or plasma cutting torch, are examples of end of arm tools or end effectors that can include a hexapod actuator located between the operational portion or "business end" of the tool and the robot arm. Any known end of arm tool or end effector could include or be mounted to a hexapod actuator located between the tool and the robot arm if additional, high speed, movements with six degrees of freedom are desired.

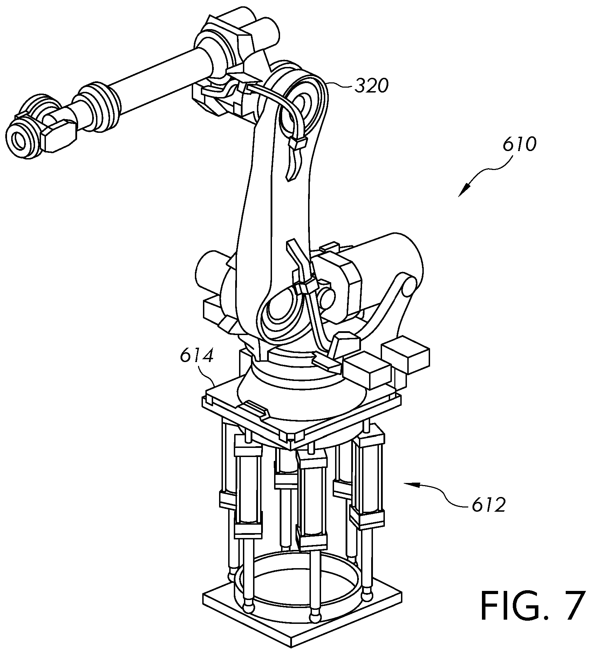

Referring to Fig. 7, the welding robot 610 itself can be mounted on a hexapod actuator 612 that moves the entire robot during a welding operation. The welding robot 610 includes a robot base 614 and a robot arm 302 attached to the base. The robot arm 302 can rotate on the robot base 614 as is known in the art. The robot base 614 is mounted on and attached to the moving platform of the hexapod actuator 610. Being able to move the entire robot 610 can provide certain advantages. For example, if the robot system is located in an area that is not stationary, such as on a ship's deck, having the ability to move the robot 610 can improve the repeatability of welding, cutting, and additive manufacturing operations. Having the ability to pitch, roll and yaw the entire robot 610 allows additional solutions to path planning problems without running into singularity problems. The hexapod actuator 612 and robot 610 could be mounted to the end of a crane or boom, and the hexapod actuator could be used to compensate for wind and reflected motion as a result of the robot moving. Wind and reflected motion can cause the crane arm to move because it is not rigid and becomes less stable as the driving radius increases. The hexapod actuator 612 can compensate for such motion by applying the inverse of the resonant motion to minimize the positional error at the end effector. For example, if wind blows the crane arm out of position, the hexapod actuator 612 can compensate quickly due to its high dynamic response and inherent stability.

Figures 8 and 9 show an example plasma arc or plasma cutting torch 400 having a hexapod actuator similar to the welding torch discussed above. The hexapod actuator is located between a proximal portion of the plasma arc torch 400 and a distal portion of the plasma arc torch that includes elements such as an electrode, a swirl ring, and a nozzle. The hexapod actuator can automatically adjust the orientation of the distal portion of the plasma arc torch 400 during a plasma cutting operation to, for example, maintain a consistent bevel angle along a cut edge of a workpiece and/or maintain a consistent torch angle relative to the workpiece.

The plasma arc torch 400 can be a liquid-cooled torch that has a handle portion 402 located along the proximal portion of the torch. The handle portion 402 can be clamped into an automated cutting device, such as computer numerical control (CNC) plasma cutting table or a robotic arm for example. Distal of the handle portion 402 is a torch body 404. The torch body 404 can be made from a metallic material and forms the majority of the outer portion of the torch 400. In an example embodiment, the torch body 404 is made from brass. However, the torch body could be made from various metals and alloys as would be appreciated by one of ordinary skill in the art. Attached to the torch body 404 is an outer retaining cap 406 that secures a shield cap 408 to the torch 400.

Figure 9 is an exploded view of the plasma arc torch. The plasma arc torch includes the hexapod actuator 212 located between the proximal portion of the torch and the distal portion of the torch. In certain embodiments, the plasma arc torch includes a quick disconnect mechanism to detach the distal portion of the torch from a base portion, and the hexapod actuator 212 can be located at the quick disconnect. The plasma arc torch also includes the IMU 214, which may be located distal of the moving platform of the hexapod actuator 212. The hexapod actuator 212 automatically adjusts the orientation of the distal portion of the plasma arc torch during a plasma cutting operation by adjusting the spatial orientation of the moving platform. Figure 9 shows various components and consumables of the torch found in the distal portion of the torch and which are displayed along an axis 409 of the torch. The torch body 404, outer retaining cap 406, and shield cap 408 are shown in Fig. 9. Extending from the torch body 404 is a nozzle body 410 or anode, and a cooling tube 412. The cooling tube 412 attaches to a cathode within the torch, as does the electrode 414. The torch further includes a swirl ring 416 and nozzle 418. The swirl ring 416 and nozzle 418 are held in place by an inner retaining cap 420 that threads onto the nozzle body 410. The electrode 414, swirl ring 416, nozzle 418, inner retaining cap 420, shield cap 408, and outer retaining cap 406 can all be considered consumables of the torch 400.

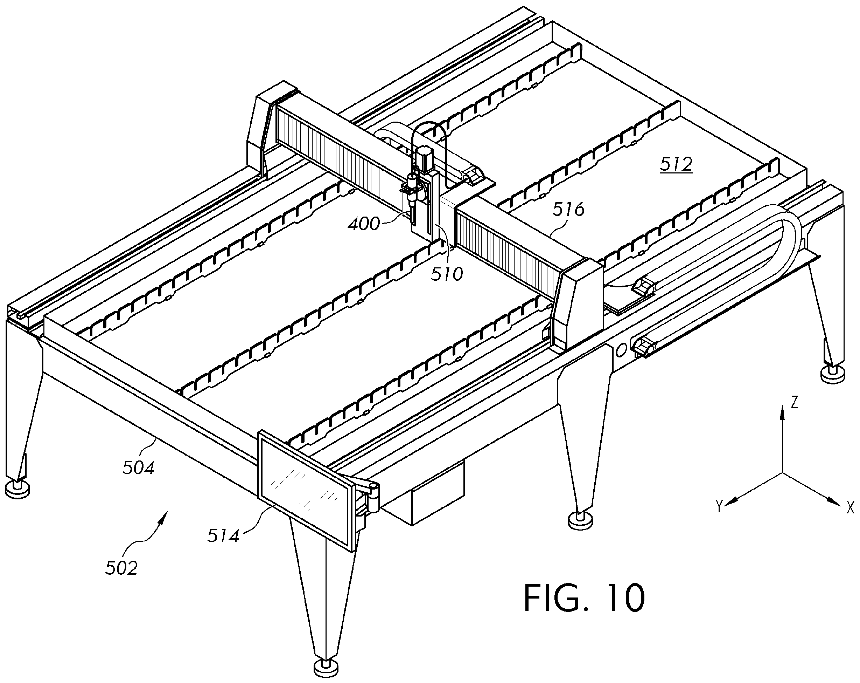

Figure 10 shows an example plasma cutting table 502 having the plasma arc torch 400. The plasma cutting table 502 has a main body 504 upon which a workpiece, such as a metal sheet or plate, is placed. The plasma cutting table 502 includes a gantry 506 that can move back and forth along the length of the cutting table's main body 504 in a first direction (e.g., in a Y direction). The gantry 506 can move on tracks or rails that extend along the sides of the table 502. The proximal portion of the plasma arc torch 400 is attached to a movable torch carriage 510 that is mounted on the gantry 506. The torch carriage 510 can move back and forth along the gantry 506 in a second direction (e.g., in an X direction) that is perpendicular to the first direction. The plasma cutting table 502 can be programmed to make precise cuts in a workpiece through controlled movements of the torch carriage 510 and gantry 506 in the X and Y directions, respectively. In certain embodiments, the torch carriage 510 can move the plasma arc torch 400 vertically toward and away from the workpiece (e.g., in a Z direction), so that the torch can be moved in three perpendicular directions. In certain embodiments, the torch carriage 510 can also rotate or tilt the torch 400 in a plane perpendicular to the plane of the table (e.g., in the X-Z plane), to make beveled cuts. In further embodiments, the torch carriage 510 can also rotate the torch 400 about the vertical or Z-axis when cutting a part from a workpiece, to maintain an angular orientation of the torch or plasma arc with respect to the kerf cut through the workpiece.

The plasma cutting table 502 can include a water tray 512 located adjacent the workpiece. During a plasma cutting operation, the water tray 512 is filled with water, and the water can be drained to allow the water chamber to be cleaned to remove accumulated dross and slag. The plasma cutting table 502 can also include a user interface 514 for setting various operational parameters of the plasma cutting table and the plasma cutting operation. The user interface 514 can be operatively connected to a motion controller, such as a CNC, for the plasma cutting table 592 and/or operatively connected to a plasma cutting power supply or the motion controller for the hexapod actuator.

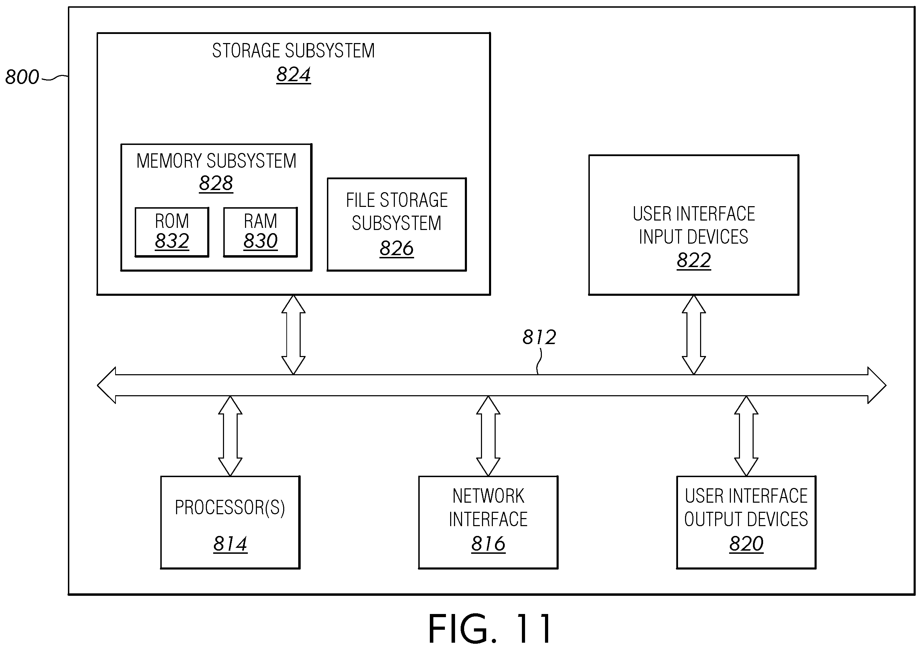

Figure 11 illustrates an embodiment of an example controller 800 or control subsystem that could be included in the hexapod motion controller, the robot controller, the teach pendant for the robot controller, and/or the welding power supply. The controller 800 includes at least one processor 814 which communicates with a number of peripheral devices via bus subsystem 812. These peripheral devices may include a storage subsystem 824, including, for example, a memory subsystem 828 and a file storage subsystem 826, user interface input devices 822, user interface output devices 820, and a network interface subsystem 816. The input and output devices allow user interaction with the controller 800. Network interface subsystem 816 provides an interface to outside networks and is coupled to corresponding interface devices in other computer systems.

User interface input devices 822 may include a keyboard, pointing devices such as a mouse, trackball, touchpad, or graphics tablet, a scanner, a touchscreen incorporated into the display, audio input devices such as voice recognition systems, microphones, and/or other types of input devices. In general, use of the term "input device" is intended to include all possible types of devices and ways to input information into the controller 800 or onto a communication network.

User interface output devices 820 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from the controller 800 to the user or to another machine or computer system.

Storage subsystem 824 provides a non-transitory, computer-readable storage medium that stores programming and data constructs that provide the functionality of some or all of the modules described herein. For example, the storage subsystem 824 may include a CAD model of a part to be welded or cut out.

These software modules are generally executed by processor 814 alone or in combination with other processors. Memory 828 used in the storage subsystem can include a number of memories including a main random access memory (RAM) 830 for storage of instructions and data during program execution and a read only memory (ROM) 832 in which fixed instructions are stored. A file storage subsystem 826 can provide persistent storage for program and data files, and may include solid state memory, a hard disk drive, a floppy disk drive along with associated removable media, a CD-ROM drive, an optical drive, flash memory, or removable media cartridges. The modules implementing the functionality of certain embodiments may be stored by file storage subsystem 826 in the storage subsystem 824, or in other machines accessible by the processor(s) 814.

Bus subsystem 812 provides a mechanism for letting the various components and subsystems of the controller 800 communicate with each other as intended. Although bus subsystem 812 is shown schematically as a single bus, alternative embodiments of the bus subsystem may use multiple buses.

The controller 800 can be of varying types including a workstation, server, computing cluster, blade server, server farm, or any other data processing system or computing device. Due to the ever-changing nature of computing devices and networks, the description of the controller 800 depicted in Fig. 11 is intended only as a specific example for purposes of illustrating some embodiments. Many other configurations of the controller 800 are possible having more or fewer components than the controller depicted in Fig. 11.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A welding torch, comprising:
a torch gun tube;
a diffuser located distal of the torch gun tube;
a contact tip located distal of the torch gun tube; and
a hexapod actuator located proximal of the diffuser and the contact tip,
wherein the hexapod actuator comprises a moving platform movable with six degrees of freedom and having a central opening through the moving platform, wherein the torch gun tube, the diffuser, and the contact tip are moved by said moving platform in said six degrees of freedom, and
wherein a wire electrode is fed to the contact tip through the central opening of the moving platform during movement of the torch gun tube, the diffuser, and the contact tip by the moving platform.

2. The welding torch of claim 1, wherein the moving platform is located proximal of the torch gun tube.

3. The welding torch of claim 1 or 2, wherein a base portion of the welding torch is attached to the moving platform,
preferably wherein a welding torch cable extends through the central opening of the moving platform and into the base portion of the welding torch,
more preferably wherein the hexapod actuator includes a printed circuit board enclosed in a metallic housing located proximal of the moving platform, and the metallic housing has a further central opening through which the welding torch cable extends,
even more preferably wherein the hexapod actuator includes six linear actuators separately operable to move the moving platform in said six degrees of freedom, and wherein the six linear actuators are located between the metallic housing and the moving platform.

4. The welding torch of any one of the preceding claims, further comprising an inertial measurement unit that generates a torch position signal during a welding operation.

5. A welding torch, comprising:
a torch gun tube;
a diffuser located distal of the torch gun tube;
a contact tip located distal of the torch gun tube; and
a motion stage located proximal of the diffuser and the contact tip,
wherein the motion stage comprises:
a first linear actuator;
a second linear actuator;
a third linear actuator;
a fourth linear actuator;
a fifth linear actuator;
a sixth linear actuator; and
a moving platform movable with six degrees of freedom by the first linear actuator, the second linear actuator, the third linear actuator, the fourth linear actuator, the fifth linear actuator, and the sixth linear actuator, and having a central opening through the moving platform, wherein the torch gun tube, the diffuser, and the contact tip are moved by said moving platform in said six degrees of freedom, and
wherein a wire electrode is fed to the contact tip through the central opening of the moving platform during movement of the torch gun tube, the diffuser, and the contact tip by the moving platform.

6. The welding torch of claim 5, wherein the six degrees of freedom include:
movement along a first linear axis,
movement along a second linear axis perpendicular to the first linear axis,
movement along a third linear axis perpendicular to both of the first linear axis and the second linear axis, and
respective rotations about each of the first linear axis, the second linear axis and the third linear axis.

7. The welding torch of claim 5 or 6, wherein the moving platform is located proximal of the torch gun tube.

8. The welding torch of any one of claims 5-7, wherein a base portion of the welding torch is attached to the moving platform,
preferably wherein a welding torch cable extends through the central opening of the moving platform and into the base portion of the welding torch,
more preferably wherein the welding torch comprises a printed circuit board enclosed in a metallic housing located proximal of the moving platform, wherein the metallic housing has a further central opening through which the welding torch cable extends,
even more preferably wherein the first linear actuator, the second linear actuator, the third linear actuator, the fourth linear actuator, the fifth linear actuator, and the sixth linear actuator are located between the metallic housing and the moving platform.

9. The welding torch of any one of claims 5-8, further comprising an inertial measurement unit that generates a torch position signal during a welding operation.

10. An arc welding system, comprising:
a welding robot including a robot base and a robot arm attached to the robot base;
a welding torch attached to the robot arm, wherein the welding torch comprises a diffuser and a contact tip;
a hexapod actuator attached to the welding robot and comprising a moving platform movable with six degrees of freedom, wherein the hexapod actuator is located proximal of the diffuser and the contact tip;
a welding power supply configured to provide an electrical power output to the welding torch; and
a motion controller operatively connected to the hexapod actuator to control movements of the moving platform during a welding operation.

11. The arc welding system of claim 10, wherein the robot base is attached to the moving platform.

12. The arc welding system of claim 10 or 11, wherein the welding torch includes a torch gun tube, and the hexapod actuator is located between the robot arm and the torch gun tube.

13. The arc welding system of any one of claims 10-12, wherein the moving platform has a central opening and a welding torch cable extends through the central opening
preferably wherein the hexapod actuator includes a printed circuit board enclosed in a metallic housing located proximal of the moving platform, and the metallic housing has a further central opening through which the welding torch cable extends
more preferably wherein the hexapod actuator includes six linear actuators separately operable to move the moving platform in said six degrees of freedom, and wherein the six linear actuators are located between the metallic housing and the moving platform.
